# EUROPÄISCHE PATENTANMELDUNG

(11) **EP 1 231 800 A1**
(43) Veröffentlichungstag der Anmeldung: **14.08.2002**
(21) Anmeldenummer: 01102939.4
(22) Anmeldetag: 08.02.2001
(51) Int. Cl.: H04Q 7/32

(54) **Mobiltelefon mit zwei SIM-Cards bzw. zwei Identitäts-Chips**

(71) Anmelder: Christ Verwaltungsgesellschaft mbH, 79183 Waldkirch (DE)
(72) Erfinder: Christ, Stefan, 8852 Altendorf (CH)

(57) **Zusammenfassung**

Ein Mobiltelefon, das zwei SIM-Cards (Subscriber Identity Module) oder deren zukünftige Nachfolgemodelle, hier Identitäts-Chips genannt, gleichzeitig aufnehmen und betreiben kann.

Es ermöglicht dem Nutzer mit einem einzigen Mobiltelefon die unterschiedlichen Vorteile von zwei verschiedenen Mobiltelefon-Netzbetreibern gleichzeitig mit ein und demselben Mobiltelefon zu nutzen.

Dies führt insbesondere beim Telefonieren im am zweitmeisten genutzten Mobilfunknetz zu einer deutlichen Reduktion der Telefonkosten.

Dies ist insbesondere Nutzer interessant, die sich regelmäßig in zwei verschiedenen Mobilfunknetzen aufhalten und dort ihr Mobiltelefon benutzen.

## Beschreibung

Mobiltelefone nach dem heutigen GSM-Standard (Global System for Mobile Communications) haben in den vergangenen Jahren eine enorm starke Verbreitung in der Bevölkerung erfahren. Die Nutzerzahlen sind rapide angestiegen. Zukünftig wird sich dieser Trend mit den UMTS-Geräten (Universal Mobile Telecommunictions System) fortsetzen.

Die heutigen Mobiltelefone weisen jedoch für Personen, die sich mit ihrem Mobiltelefon in fremden Funknetzen, d.h. Funknetzen von Roaming-Partnergesellschaften, aufhalten, einen beträchtlichen Nachteil auf: Das Telefonieren'in den Fremdnetzen ist deutlich teurer als im Heimatnetz.

Diese Erfindung bezweckt, für das am zweitmeisten genutzte Mobilfunknetz des betreffenden Mobilfunknutzers diese Kostenproblematik deutlich zu verbessern, indem sie es dem Mobilfunknutzer erlaubt, mit einem einzigen Mobiltelefon die unterschiedlichen Vorteile von zwei verschiedenen Mobiltelefon-Netzbetreibern gleichzeitig mit ein und demselben Mobiltelefon zu nutzen.

Nach dem bisherigen Stand der Technik, der es im Mobiltelefon lediglich ermöglicht, die SIM-Card (Subscriber Identity Module) eines einzigen Netzbetreibers aufzunehmen, wäre dieses Problem nur lösbar, wenn der Nutzer zwei Mobiltelefone mit sich herumträgt. Eine weitere theoretische Möglichkeit wäre das permanente Wechseln, d.h. Aus- und Einbauen der betreffenden SIM-Cards, was jedoch im alltäglichen Gebrauch des Mobiltelefons zu umständlich ist und leicht zu Beschädigungen des Mobiltelefons führt. Ferner wäre der Nutzer auf der Telefonnummer einer SIM-Card jeweils nicht erreichbar.

Nach dem bisherigen Stand der Technik mit nur einer SIM-Card müssen deutlich höhere Telefonkosten für Sprach- bzw. Datenübermittlung im fremden Mobilfunknetz in Kauf genommen werden.
Diese Telefonkosten im am zweitmeisten genutzten Mobilfunknetz des betreffenden Nutzer werden durch diese Erfindung deutlich reduziert.

Die Erfindung eignet sich insbesondere für Personen, die sich regelmäßig in zwei verschiedenen Mobilfunknetzen aufhalten und darin Telefongespräche führen und/oder Datentransfer via Mobiltelefon vornehmen.
Dies ist insbesondere für Privat- und Geschäftsleute interessant, die sich regelmäßig in zwei verschiedenen Ländern bzw. geografischen Regionen aufhalten, z.B.
- für Nutzer im Grenzgebiet von geografisch sehr nähe beieinanderliegenden Mobiltelefonnetzen,
- für Nutzer mit zwei verschiedenen Wohnsitzen,
- für Nutzer, die z.B. im Land A, Stadt X arbeiten und in Land B, Stadt Y wohnen.

Die angestrebte deutliche Reduzierung der Mobiltelefonkosten des betreffenden Nutzers wird mit vorliegender Erfindung dadurch erreicht, daß das Mobiltelefon mit einer Vorrichtung bzw. der Möglichkeit zur Aufnahme und zum Betrieb von zwei SIM-Cards oder der zukünftigen Nachfolgemodelle der heutigen SIM-Cards - nachfolgend mit dem Begriff Identitäts-Chip bezeichnet - ausgestattet wird.
Ein solches Mobiltelefon soll nachfolgend auf Deutsch als **"Dualcard Mobiltelefon"** und auf Englisch als **"Dualcard Mobile Telephone"** bezeichnet werden.
Die zweite SIM-Card bzw. der zweite Identitäts-Chip mit Halterung ist platzmäßig leicht in jedem Mobiltelefon unterzubringen.

Mit einem solchen Dualcard Mobiltelefon ist der Nutzer, der sich im zweiten, fremden Mobilfunknetz aufhält, einerseits via Roaming über seine Heimattelefonnummer seines Heimatnetzbetreibers via SIM-Card 1/Identitäts-Chip 1 erreichbar. Andererseits ist es für den Nutzer via SIM-Card 2/Identitäts-Chip 2 möglich, zu den - im Vergleich zu den normalerweise zu bezahlenden Roaming-/Fremdnetzgebührendeutlich günstigeren Normaltarifen des zweiten, fremden Mobilfunknetzes, in dem sich der Nutzer gerade aufhält, über die/den zweite/n - jetzt lokale/n - SIM-Card 2/ Identitäts-Chip 2 zu telefonieren bzw. Daten zu übermitteln.
Selbstverständlich ist der Nutzer auch über die Telefonnummer von SIM-Card 2/Identitäts-Chip 2 erreichbar, sofern er dies wünscht.

## Patentansprüche

1. Ein Mobiltelefon nach dem GSM- (Global System for Mobile Communications) oder HSCSD-(High Speed Circuit Switched Data) oder GPRS- (General Packed Radio System) oder EDGE- (Enhanced Data Range for GSM resolution) oder UMTS- (Universal Mobile Telecommunications System) -Standard, in einem oder mehreren Frequenzbereichen betreibbar, oder nach einem anderen zukünftigen Standard in einem oder mehreren anderen Frequenzbereich/en zur Sprach- und/oder Datenübertragung, das dadurch gekennzeichnet ist, daß es zwei SIM-Cards (Subscriber Identity Module) gleichzeitig aufnehmen und betreiben kann - ein solches Mobiltelefon soll nachfolgend auf Deutsch als **"Dualcard Mobiltelefon"** und auf Englisch als **"Dualcard Mobile Telephone"** bezeichnet werden.

2. Das Patent beansprucht ebenfalls Gültigkeit für zukünftige Mobiltelefone, die dadurch gekennzeichnet sind, daß sie die Identifikation des Mobiltelefon-Nutzers bzw. des Mobiltelefon-Vertrags über Nachfolgemodelle der heute üblichen SIM-Cards, nachfolgend allgemein als Identitäts-Chips bezeichnet, vornehmen und die demzufolge dadurch gekennzeichnet sind, daß sie zwei dieser Identitäts-Chips aufnehmen und betreiben können, damit ein und dasselbe Mobiltelefon jeweils einen Mobiltelefon-Vertrag pro Identitäts-Chip, d.h. insgesamt zwei, mit zwei verschiedenen Mobiltelefon-netzbetreibern gleichzeitig repräsentieren kann.

3. Ein Dualcard Mobiltelefon gemäß Anspruch 1 oder Anspruch 2 ist dadurch gekennzeichnet, daß es dem Nutzer ermöglicht, mit einem einzigen Mobiltelefon die Vorteile von zwei verschiedenen Mobiltelefonnetzen unterschiedlicher Netzbetreiber gleichzeitig mit ein und demselben Gerät zu nutzen.

4. Ein Dualcard Mobiltelefon gemäß Anspruch 1 oder Anspruch 2 ist dadurch gekennzeichnet, daß der Nutzer des Dualcard Mobiltelefons, der sich im zweiten, fremden Mobilfunknetz aufhält, einerseits via Roaming über seine Heimattelefonnummer seines Heimatnetzbetreibers via SIM-Card 1/Identitäts-Chip 1 erreichbar ist und es andererseits via SIM-Card 2/Identitäts-Chip 2 möglich ist, zu den - im Vergleich zu den normalerweise zu bezahlenden Roaming-/Fremdnetzgebührendeutlich günstigeren Normaltarifen des zweiten, fremden Mobilfunknetzes, in dem sich der Nutzer gerade aufhält, über die/den zweite/n - jetzt lokale/n - SIM-Card 2/Identitäts-Chip 2 zu telefonieren bzw. Daten zu übermitteln sowie daß der Nutzer auch über die Telefonnummer von SIM-Card 2/Identitäts-Chip 2 erreichbar ist, sofern er dies wünscht. (Eine Voraussetzung hierfür ist natürlich, daß der Nutzer ebenfalls einen Vertrag mit einem auf ihn zugeschnittenen Mobiltelefonnetzanbieter/Provider des zweiten geografischen Gebiets abgeschlossen hat und über eine diesbezügliche SIM-Card bzw. einen diesbezüglichen Identitäts-Chip verfügt.)

5. Ein Dualcard Mobiltelefon gemäß Anspruch 1 oder Anspruch 2 ist dadurch gekennzeichnet, daß es mit der nächstgelegenen Mobilfunk-Basisstation einerseits für SIM-Card 1/Identitäts-Chip 1 und andererseits für SIM-Card 2/Identitäts-Chip 2 kommuniziert, wie wenn es sich um zwei getrennte Mobiltelefone handeln würde.

6. Ein Dualcard Mobiltelefon gemäß Anspruch 1 oder Anspruch 2 ist dadurch gekennzeichnet, daß der Nutzer softwaregesteuert am Mobiltelefon über die Priorität zwischen SIM-Card 1/Identitäts-Chip 1 bzw. SIM-Card 2 /Identitäts-Chip 2 entscheiden kann, so daß der Nutzer auswählen kann, über welche/n SIM-Card/Identitäts-Chip er ein Telefongespräch bzw. einen Datentransfer vornehmen möchte.

7. Ein Dualcard Mobiltelefon gemäß Anspruch 1 oder Anspruch 2 ist dadurch gekennzeichnet, daß der Nutzer auswählen kann, ob er zwischen zeitlich gleichzeitigen Gesprächen die Funktionen Anklopfen/Makeln erlauben möchte, oder ob das Mobiltelefon beim Führen eines Gesprächs bzw. bei Datenaustausch auf der Telefonnummer der/s einen SIM-Card/Identitäts-Chips für die Telefonnummer der/s anderen SIM-Card/Identitäts-Chips ein Besetztzeichen ausgeben soll.

8. Ein Dualcard Mobiltelefon gemäß Anspruch 1 oder Anspruch 2 ist dadurch gekennzeichnet, daß es über die entsprechende Elektronik und Funktechnik verfügt, um das Management der beiden SIM-Cards bzw. Identitäts-Chips zu bewerkstelligen.
